(19) Europäisches Patentamt
European Patent Office
Office européen des brevets

(11) EP 2 197 658 B1

(12) # EUROPEAN PATENT SPECIFICATION

(45) Date of publication and mention of the grant of the patent:
**11.04.2018 Bulletin 2018/15**

(21) Application number: **08786401.3**

(22) Date of filing: **24.07.2008**

(51) Int Cl.:
***B29D 11/00*** *(2006.01)* ***B29C 35/16*** *(2006.01)*

(86) International application number:
**PCT/EP2008/059732**

(87) International publication number:
**WO 2009/033873 (19.03.2009 Gazette 2009/12)**

(54) **PROCESS FOR APPLYING A COATING FILM ONTO A SURFACE OF A LENS SUBSTRATE**

VERFAHREN ZUM AUFBRINGEN EINES ÜBERZUGSFILMS AUF EINE OBERFLÄCHE EINES LINSENSUBSTRATS

PROCÉDÉ D'APPLICATION D'UN FILM DE REVÊTEMENT SUR UNE SURFACE D'UN SUBSTRAT DE LENTILLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.09.2007 US 855067**

(43) Date of publication of application:
**23.06.2010 Bulletin 2010/25**

(73) Proprietor: **Essilor International**
**94220 Charenton-le-Pont (FR)**

(72) Inventors:
- **GLACET, Arnaud**
  **St Petersburg, FL 33709 (US)**
- **JIANG, Peiqi**
  **St Petersburg, FL 33709 (US)**
- **WEBER, Steven**
  **St Petersburg, FL 33709 (US)**

(74) Representative: **Jacobacci Coralis Harle**
**32, rue de l'Arcade**
**75008 Paris (FR)**

(56) References cited:
**WO-A-2004/101260** **US-A- 4 304 751**
**US-A- 4 880 591** **US-A- 5 139 407**
**US-A1- 2004 194 880** **US-A1- 2006 169 407**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 197 658 B1

## Description

## BACKGROUND OF THE INVENTION

### 1. Field of the invention

The present invention relates to an improved process or method for applying a coated or uncoated film onto a first main surface of a lens substrate which can be implemented in a short period of time without any risk of deformation of the lens substrate and which avoids overheating of a temperature sensitive coating borne by a second main surface of the lens substrate opposite to the first main surface. The process combines a unique heating and UV as an activation step for the adhesives.

### 2. Description of related art

It is a common practice in the art to coat at least one main surface of a lens substrate, such as an ophthalmic lens or lens blank, with several coatings for imparting to the finished lens additional or improved optical and /or mechanical properties.

Thus, it is usual practice to coat at least one main surface of a lens substrate, typically made of an organic glass material, with successively, starting from the main surface of the lens substrate, an impact-resistant coating (impact resistant primer), an abrasion and/or scratch-resistant coating (hard coat), an anti-reflecting coating, an antistatic coating and, optionally, a hydrophobic top coat. Other coatings such as a polarized coating, a photochromic, an electrochromic coating, a dying coating or a microstructured coating may also be applied onto one or both main surfaces of the lens substrate.

Numerous processes and methods have been proposed for coating a surface of an ophthalmic lens and are disclosed.

US Patent n° 4,304,751 describes a discrete thermoplastic composition which is formed into a shaped article in a rapid stamping process. The composition is placed on and preheated with a rigid metal plate which has been preshaped to fit the contour of one of the dies of the stamping press.

US Patent n° 5,139,407 describes a thermoplastic sheet which is placed between a pair of mold members, each having a thermal insulator and a mating metal mold insert.

US Patent n° 4,880,591 discloses a speaker vibration member which is made by melting materials containing no less than 10% of a thermoplastic liquid crystal polymer and 3 to 40% of fiber or flake filled by weight, allowing the mixture to flow, cooling the mixture, and solidifying it.

US Patent n° 6,562,466 describes one process or method for transferring a coating from at least one mold part onto at least a geometrically defined surface of a lens blank comprising:

- providing a lens blank having at least one geometrically defined surface;
- providing a support or mold part having an internal surface bearing a coating and an external surface;
- depositing on said geometrically defined surface of said lens blank or on said coating a pre-measured amount of a curable adhesive composition;
- moving relatively to each other the lens blank and the support to either bring the coating into contact with curable adhesive composition or bring the curable adhesive composition into contact with the geometrically defined surface of the lens blank;
- applying a sufficient pressure onto the external surface of the support so that the thickness of a final cured adhesive layer is less than 100 micrometers ;
- curing the layer of adhesive composition; and
- withdrawing the support or mold part to recover the lens blank with the coating adhered onto the geometrically defined surface of said lens blank.

In the process of US Patent n° 6,562,466, a light or thermal curing adhesive is used to transfer the coating layers from the support to the surface of the lens substrate. The adhesive is required to stick both to the exposed film on the support and the surface of the lens substrate.

International patent application WO 2006 082 105 discloses a process for applying a coated or uncoated film onto at least one main surface of a lens substrate which comprises the steps of:

(a) providing a lens substrate having main surfaces;
(b) providing a coated or uncoated film;
(c) forming, on either face of the coated or uncoated film or one of the said main surfaces of the lens substrate, a

layer of a dry latex;

(d) depositing at least one drop of a water base activating liquid on either one of the said main surfaces of the lens substrate, a face of the coated or uncoated film or an exposed surface of the dry latex layer;

(e) moving relatively to each other the coated or uncoated film and the lens substrate and applying a sufficient force to the coated or uncoated film to spread the water base activating liquid and form a thin pellicle of the water base activating liquid between the dry latex layer and either the lens substrate or the coated or uncoated film;

(f) heating the thin pellicle of water base activating liquid and the dry latex layer;

(g) releasing the applied force; and

(h) recovering the lens substrate with the coated or uncoated film adhered to the lens substrate main surface.

Preferably, heating step (f) is performed at a temperature higher than the "tacky" temperature of the dry latex layer. The "tacky" temperature is the temperature at which the dry latex layer becomes sticky.

Typically, heating step (f) is performed at a temperature ranging from 40°C to 130°C, preferably 50° C to 120°C.

In International patent application WO 2006 082 105 heating source can be an air oven, a hot water bath, an IR source or a microwave source. However, this document does not give any information about microwave heating and how one could obtain a controlled heating essentially localized only in the area of the coated or uncoated film and the lens substrate, in particular when using an inflatable membrane apparatus for implementing the process.

Inflatable membrane apparatuses for implementation of coating application are disclosed in particular in published International Patent Applications WO 03/004255 and WO 07/020236 in the name of ESSILOR INTERNATIONAL (COMPAGNIE GENERALE D'OPTIQUE).

The heating step is in fact commonly performed by placing the entire system including the pressing apparatus, the film, the heat activable adhesive layer and the lens substrate into a conventional convection oven and heating lasts about 30 minutes at a temperature typically set at about 110°C.

These heating procedures have the drawbacks of being energy consuming, because the entire system is heated, and necessitates long heating time to complete the process, for example about 30 minutes.

Often, before application of the coated or uncoated film, a main surface of the lens substrate, typically the front (generally convex) surface, is already coated with one or more coating. In particular, the front surface is commonly coated with an anti-reflective (AR) coating. These AR coatings are usually highly temperature sensitive and are also sensitive to deformation. Overheating and bending of the lens substrate will cause crazing and/or cracking of the AR coating.

International Patent Application WO 04/101260 discloses a lens coating curing method which comprises providing a lens having a first coating on a first side of the lens ; depositing a heat-curable on a second side of the lens ; heat curing the heat-curable hard coating ; and cooling the lens so that the first coating is not damaged by the heat curing. Cooling of the first coating is obtained by circulation of cooled water or by blowing compressed air on the first coating. The method does not comprise any pressure application for forming the lens coating. Additionally, cooling necessitates the uses of a complex circulating chilled water system.

## SUMMARY OF THE INVENTION

Therefore, a first object of the invention is to provide a process for applying under pressure, in particular by means of an inflatable membrane pressing apparatus, a coated or uncoated film onto a first main surface of a lens substrate using an adhesive layer formed between a face of the coated or uncoated film and the first main surface of the lens substrate, said process comprising a heating step of the coated or uncoated film which avoids or at least limits risk of crazing and/or cracking of a temperature sensitive coating formed on a second main surface of the lens substrate opposite to the first main surface substrate of the lens on which the coated or uncoated film is to be applied.

Second object of the invention is to combine a heating and UV process as an adhesive activation step, so that the coating transfer process can be completed in a short period of time.

A further object of the invention is to provide a process as above avoiding any bending of the lens substrate during application of pressure.

The above objects are achieved according to the invention by providing a process according to claim 1 for applying under pressure a coated or uncoated film onto a main surface of a lens substrate (L) which comprises:

(a) providing a coated or uncoated film;

(b) providing a lens substrate having a first main surface and an opposite second main surface, said second main surface bearing at least one coating which is sensitive to the temperature ;

(c) forming between a face of the coated or uncoated film and the first main surface of the lens substrate a layer of an adhesive;

(d) applying a pressure on the coated or uncoated film to urge said film against the lens substrate first main surface,

with the adhesive there between and to conform the film to the shape of the lens substrate first main surface;
(e) while maintaining the applied pressure on the film, subjecting the adhesive to an activation step for activating the adhesive and promoting adhesion between the film and said first main surface;
(f) stopping activation and releasing the applied pressure; and
(g) recovering the lens substrate with the coated or uncoated film adhered thereon;

wherein, during pressure application step (d) and activation step (e) the second main surface of the lens substrate (L) is at least partly in contact with a matching surface of a non deformable heat sink block made of a plastic material, and during activation step (e) the first main surface of the lens substrate (L) is heated to at least a temperature T, while the second main surface of the lens substrate is essentially heated by conduction through the lens substrate (L), whereby the temperature on the second main surface of the lens substrate is at least 10°C lower than the temperature T without the use of any active cooling system.

By "essentially heated by conduction through the lens substrate" it is meant that at least 90%, preferably at least 95% and better at least 99% of the heat generated on the second main surface of the lens substrate results from conduction through the lens substrate material of the heat applied on the first main surface.

By a "temperature sensitive coating" there is meant a coating made of a material which suffers from crazing and/or cracking if subjecting to the same film application process but without any cooling of the coated surface, in particular without the use of a non deformable heat sink block.

By "active cooling" it is meant the use of a cooling fluid circulating in the vicinity of the second main surface or impinging the second main surface.

The temperature sensitive coating may be any classical functional coating used in the ophthalmic field for imparting and/or improving the lens substrate mechanical and/or optical properties, such as an abrasion and/or scratch resistant coating (hard coating), and an anti-reflective coating (AR coating). Preferably the temperature sensitive coating is an AR coating and in particular an AR coating made of mineral layers.

Preferably, the activation step (e) is a heating step, a UV irradiation step or a combination of both.

In general, during activation step (e), the second main surface of the lens substrate is heated for less than 10 minutes, more preferably less than 5 minutes.

Preferably, during activation step (e) the temperature of the second main surface of the lens substrate does not exceed 70°C, more preferably 50°C and is at least 20°C lower than the temperature T.

Generally, temperature T ranges from 50°C to 110°C, preferably from 70°C to 90°C.

Preferably, the matching surface of the non deformable heat sink block is in contact with at least 50% of the second main surface of the lens substrate, and wherein the contact surface is located in the central area of the said second main surface.

By "non deformable heat sink block" there is meant a block whose geometry is assumed to remain constant before, during and after the application of a force exerted on it. Therefore, the non deformable block does not bend during application of the pressure on the coated or uncoated film.

Typically, the heat sink block is made of a material having a thermal conductivity of at least 0.15 W $m^{-1}$ $K^{-1}$, for example the plastic material may be polycarbonate (thermal conductivity at 23°C ranging from 0.19 to 0.22 W $m^{-1}$ $K^{-1}$). Preferably, the matching surface of a heat sink block made of a plastic material is the entire surface of the second main surface. A silicone membrane can also be inserted between the plastic support and the second main surface of the lens to be coated in order to protect the AR coating of the lens. Typical thermal conductivity value for silicone elastomers is 0.23 W $m^{-1}$ $K^{-1}$ at 23°C. In this embodiment, the heat sink block is made of a plurality of materials each having thermal conductivities of at least 0.15 W $m^{-1}$ $K^{-1}$.

By plurality of materials, it is meant at least two different materials each one being non deformable.

Preferably the first main surface of the lens substrate is the rear surface (generally the concave surface) of the lens substrate and the second main surface of the lens substrate is the front surface (generally the convex surface) of the lens substrate.

By rear surface it is meant the surface of the lens which is the closest to a wearer's eye. Conversely the front surface is the surface of the lens which is the farthest from a wearer's eye.

In a preferred embodiment, the coated or uncoated film is a coated film comprising a flexible carrier having one face bearing a coating or a stack of coatings and the process further comprises the step of peeling off the carrier to recover the lens substrate with the coating or stack of coatings adhered thereon.

The adhesive can be any adhesive that, is thermally and/or UV curable, hot melt adhesives (HMA), hot melt curable adhesives that are obtained by mixing at least one hot melt adhesive, in presence or absence of solvent(s) and at least one thermally or UV polymerizable monomer or oligomer, UV curable hot melt adhesives (UV-HMA adhesives) being preferred.

The adhesive can be a PSA (pressure sensitive adhesive) whose adhesive effect can be enhanced by heating.

Some HMAs and PSAs have been described in US 2007-0122547.

The adhesive can also be a latex adhesive that can be activated under heating by a water based liquid such as described in US patent 2006-0169407.

The pressure is preferably applied by means of an inflatable membrane. Typically, the applied pressure ranges from 0.35 to 4.2 bar (5 to 60 psig), preferably 0.35 to 3 bar and better 0.35 to 2.1 bar (5 to 30 psig).

The film can be a coated film preferably comprising a carrier, in particular a flexible carrier, having one surface bearing at least one coating or a stack of coatings and the process further comprises withdrawing the carrier, whereby the coating or the stack of coatings is transferred from the carrier on the first main surface of the lens substrate. In that embodiment the curable adhesive is placed on the coating or stack of coatings or on the first main surface of the lens substrate, preferably on the coating or coating stack of the carrier. Of course, when the carrier is coated with a stack of coatings, the coatings are applied on the surface of the carrier in the reverse order with regard to the desired order of the coating stack on the lens substrate.

The film can be an uncoated film, such as a polarizing film, a coloured film, a photochromic film or a combination of such films. In that embodiment the curable adhesive layer is formed either on side of the film or on the first main surface of the lens substrate, or on both sides of the uncoated film surface and the first main surface of the lens substrate.

The film can also be a coated film comprising a carrier, preferably a flexible carrier, having one surface coated with a coating or a stack of coatings, the carrier being intended to remain on the lens substrate after completion of the application process. The flexible carrier may be a polarizing film, a coloured film, a photochromic film or a combination thereof. In that latter embodiment, the curable adhesive may be applied on the uncoated surface of the flexible carrier or on the first main surface of the lens substrate.

Preferably, the coated or uncoated film is applied on the rear surface (generally the concave surface) of the lens substrate, i.e. the surface of the lens substrate which, in use, is the closest to the wearer's eye, except when the film is an uncoated film, in particular a polarized film, where it is preferably applied on the front surface (generally the convex surface) of the lens substrate, i.e. the surface of the lens substrate which, in use, is the farthest from the wearer's eye.

Of course, rear and front surfaces of the lens substrate can be both coated using the process of the invention.

The rear or front surface to be coated in this invention could be a sphere, toric or progressive curve by using adequate sphere flexible carrier.

## BRIEF DESCRIPTION OF THE DRAWINGS

The foregoing and other objects, features and advantages of the present invention will become readily apparent to those skilled in the art from a reading of the detailed description hereafter when considered in conjunction with the accompanying drawings wherein:

Figures 1 is a schematic view of a system using an inflatable membrane apparatus for both applying the pressure and heating including UV light source the first main surface of the lens substrate

Figure 2 is a cross-sectional view, of one embodiment of a non deformable heat sink block used in connection with an inflatable membrane apparatus for implementing the process of the invention.

Figure 3 are graphs of the temperatures of the first and second main surfaces of a lens substrate during implementation of the process by heating and UV of the invention using a non deformable heat sink block made of a plastic material.

Figure 4 are graphs of the temperature of the first and second main surfaces of a lens substrate during implementation of a process without the use of a non deformable heat sink block.

Figure 5 are graphs of the temperature of the first and second main surfaces of a lens substrate during implementation of a process with the use of a conventional air heating + UV oven with a non deformable heat sink block according to the invention made of plastic material.

## DETAILED DESCRIPTION OF THE INVENTION AND PREFERRED EMBODIMENTS

In this patent application, when one refers to the base curvature of the carrier, one means the base curvature of the working surface of the carrier, that is to say the surface which is going to adhere to the lens substrate or which bears the coatings to be transferred to the lens substrate, after withdrawal of the carrier.

In the same way, base curvature of the lens substrate means the base curvature of the surface to which the carrier is going to adhere or which bears the coatings that are going to be transferred.

In this application, the base curvature has the following definition:

For a spheric surface, having a radius of curvature R, base curvature (or base) = 530/R (R in mm).

Such a definition is quite classical in the art.

For a toric surface, there are two radii of curvature, and one calculates, according to the above formula, two base curvatures BR, Br with BR<Br.

The lens substrate is generally a lens or lens blank, preferably an ophthalmic lens or lens blank.

The substrate is preferably a lens blank.

The lens substrate may be surfaced, polished or only fined without being polished.

The lens surface may be obtained by digital cutting without any fining or polishing step.

In this case, CNC (computer numeric control) process is used, for example the Schneider machine.

Preferably, the first main surface of the lens substrate onto which the coated or uncoated film is applied, is a geometrically defined surface.

Although the lens substrate can be made of mineral glasses or organic glasses, it is preferably made of organic glasses.

The organic glasses can be either thermoplastic materials such as polycarbonates and thermoplastic polyurethanes or thermosetting (cross linked) materials such as diethyleneglycol bis allylcarbonate polymers and copolymers (in particular CR 39® PPG), thermosetting polyurethanes, polythiourethanes, polyepoxides, polyepisulfides, poly(meth)acrylates, polythio(meth)acrylates, as well as copolymers and blends thereof.

Preferred materials for the lens substrate are polycarbonates and diethylene glycol bis allyl carbonate copolymers.

The curable adhesive may be any curable adhesive that will achieve adhesion of the coated or uncoated film or of a coating borne by this film to the main surface of the lens substrate without impairing the optical properties of the finished lens.

Thus the adhesive can be a thermally and/or UV curable adhesive, a hot melt adhesive (HMA), hot melt curable adhesive that is obtained by mixing at least one hot melt adhesive, in presence or absence of solvent(s) and at least one thermally or UV polymerizable monomer or oligomer.

UV-curable hot melt adhesives (UV-HMA) are preferred.

When a curable adhesive in liquid form is used, it may be dispensed as at least one drop at the center, as a random pattern of drops, spread out by spin coating or spread using a precision dispensing valve.

Thermally curable adhesive can be a polyurethane composition, an epoxy composition, a (meth)acrylate composition such as a polyethyleneglycol di(meth)acrylate or an ethoxylated bisphenol A di(meth)acrylate composition.

Preferred thermally curable adhesive compositions are acrylate compositions such as polyethyleneglycoldiacrylate and ethoxylated bisphenol A diacrylate compositions, various trifunctional acrylates compositions such as (ethoxylated) trimethylolpropane triacrylate and tris(2-hydroxyethyl) isocyanurate compositions.

Monofonctional acrylate compositions such as isobornylate, benzacrylate, phenylthioethylacrylate compositions, are also suitable.

The above compositions can be used alone or in combination.

By "hot-melt adhesive HMA", it is intended to mean a room temperature solid but flexible adhesive, which melts or drops in viscosity upon heating, and rapidly sets with cooling to create a bond.

Preferred class of adhesives is UV curable HMA which comprises at least one base polymer and at least one UV curable monomer or oligomer.

Base polymer can be any known polymer for formulating a hot melt adhesive, but is preferably a thermoplastic polymer.

Thus, base polymer can be chosen amongst polyolefines, polyamides, polyurethanes, polyurethane/ureas, polyvinypyrrolidones, polyesters, polyesteramides, poly(oxazolines) and poly(meth)acrylic systems.

Suitable polyolefines are disclosed in particular US patent n°5,128,388. Preferred polyolefines are block thermoplastic elastomers such as block elastomers comprising polystyrene blocks, polybutadiene blocks, polyisoprene blocks or ethylene-butylene copolymer blocks.

Base polymer can be a polyurethane in particular a dry polyurethane latex, such as a latex commercialized under trade names W-240 and W-234 by Baxenden.

A preferred class of base polymers is comprised of the poly(meth) acrylic systems. Dry poly(meth)acrylic latexes, such as the acrylate latex commercialized under the name ACRYLIC LATEX A-639 by Zeneca can be used. Amongst the preferred poly(meth)acrylic systems there can be cited the poly(alkyl(meth)acrylates) and in particular the poly(alkylmethacrylates) such as poly(methylmethacrylates) and poly(butylmethacrylates).

Other preferred latexes are core/shell latexes such as those described in US pat. N°6,503,631 and especially latexes based on alkyl(meth)acrylates such as butyl acrylate or butylmethacrylate.

Another preferred class of base polymers is comprised of the poly(oxazolines).

These polymers comprise recurring units of formula

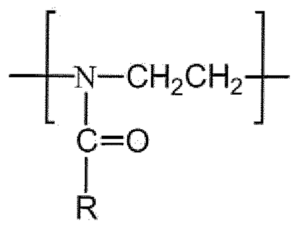

In which R is an alkyl, preferably a $C_1$-$C_4$ alkyl group or an aryl group, preferably a phenyl group.

Preferred poiy(oxazolines) are poly(2-ethyl-2-oxazoline) and poly(2-ethyl-2-phenyl-oxazoline).

Such poly(oxazolines) are commercially available under the trade name AQUAZOL® (poly(2-ethyloxazoline)) and AQUAZOL HP/HV1S® (poly(2-ethyi-2-phenyl-2-oxazoline) from Polymer Chemistry Innovations Inc.

The most preferred base polymers are poly(alkyl(meth)acrylates), in particular poly(butylmethacrylates), and poly(oxazolines), in particular poly(alkyl oxazolines) and especially poly(2-ethyl-2-oxazoline).

The second important constituent of the UV curable HMA is a UV curable monomer or oligomer or a mixture of such monomers or oligomers. Any curable monomers and/or oligomers can be used in the UV curable HMA.

Amongst the preferred UV curable monomers and oligomers there may be cited monomers and oligomers comprising at least one, preferably two or more UV polymerizable functional groups such as (meth)acrylate groups, hydroxyl groups and carboxy groups

Preferred monomers and oligomers are mono and poly(meth)acrylate compounds. Poly(meth)acrylate compounds are preferably di and tri(meth)acrylate compounds. Mixtures of mono and poly(meth)acrylate compounds, in particular mixtures of mono, di and/or tri(meth)acrylate compounds are preferred. Amongst the mono(meth)acrylate compounds there may be cited 2,4,6-tribromophenoxyethyl(meth)acrylate. Amongst di(meth)acrylate compounds there may be cited cyclohexane dimethanol diacrylate and bisphenol A dimethacrylates. Amongst triacrylate compounds there may be cited tris(2-hydroxyethyl) isocyanurate triacrylate.

UV curable monomers and oligomers can be liquid at ambient temperature (i.e. a temperature of 20 to 25°C) and in that case the base polymer may be directly incorporated in the monomers and oligomers. The UV curable monomers and oligomers can be solids at ambient temperature and thus a solvent or mixture of solvents can be used for preparing the UV curable HMA composition.

The solvent or mixture of solvents must be compatible both with the HMA base polymers and the monomers and oligomers.

Appropriate solvents are water, alcohols such as alkanols, ketones such as methylethylketones, esters such as alkylacetates, THF etc.

In general, the weight ratio photopolymerizable monomers and/or oligomers /HMA base polymers ranges from 95:5 to 5:95, preferably 80:20 to 20:80, and even better 40:60 to 60/40.

The HMA as well as any UV curable adhesive may also include at least one UV polymerization initiator.

As the UV polymerization initiator, any widely known compound can be used without limitation that is added for UV polymerizing the polymerizable monomers. Among the UV polymerization initiators that can be suitably used in the present invention, there may be cited benzophenone compounds, acetophenone compounds, $\alpha$-dicarbonyl compounds, acylphosphine oxide compounds, bisacylphosphine oxide compounds and mixtures thereof.

More specifically speaking, photoinitiator compounds can be represented by the following formula:

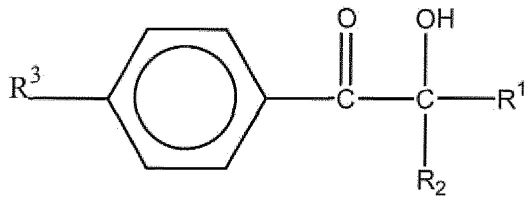

wherein $R^1$ and $R^2$ are alkyl groups which together may form a cyclohexane ring, and $R^{13}$ is an alkyl group or a hydrogen atom,

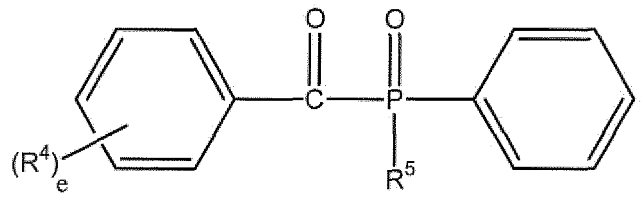

wherein $R^4$ is the same or different and is a methyl group, a methoxy group or a chlorine atom, e is 2 or 3, and $R^5$ is a phenyl group or methoxy group,

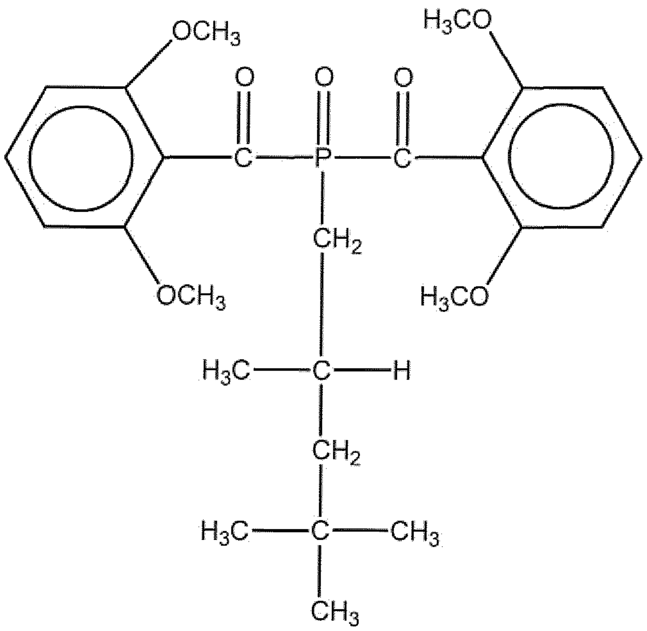

Examples of UV polymerization initiators than can be preferably used in the present invention are as described below:

Acetophenone polymerization initiators:

1) 1-Phenyl-2-hydroxy-2-methylpropane-1-one,
2) 1-Hydroxycyclohexylphenyl ketone, and
3) 1-(4-Isopropylphenyl)-2-hydroxy-2-methytpropane-1-one.

$\alpha$-Dicarbonyl compounds :

1) 1,2-Diphenylethanedione, and
2) Methylphenylglyoxylate.

Acylphosphine oxide photopolymerization initiators :

1) 2,6-Dimethylbenzoyldiphenylphosphine oxide,
2) 2,4,6-Trimethylbenzoyldiphenylphosphine oxide,
3) Methyl 2,4,6-trimethylbenzoyldiphenylphosphinate ester,
4) 2,6-Dichlorobenzoyldiphenylphosphine oxide, and
5) 2,6-Dimethoxybenzoyldiphenylphosphine oxide.

These UV polymerization initiators can be used in a single kind or in a combination of two or more kinds.

Bisacylphosphine oxide photopolymerization initiators :

1) Bis(2,6-dimethoxybenzoyl)-2,4,4-trimethylpentylphosphine oxide.

Among the preferred UV-initiators are the following initiators :

Irgacure® 500
a 1/1 mixture of benzophenone and 1-hydroxycyclohexylphenyl.

Irgacure® 184

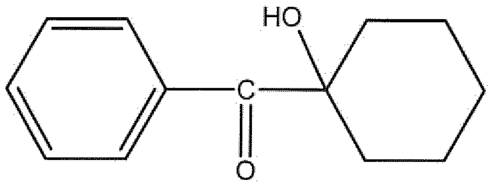

Irgacure® 819

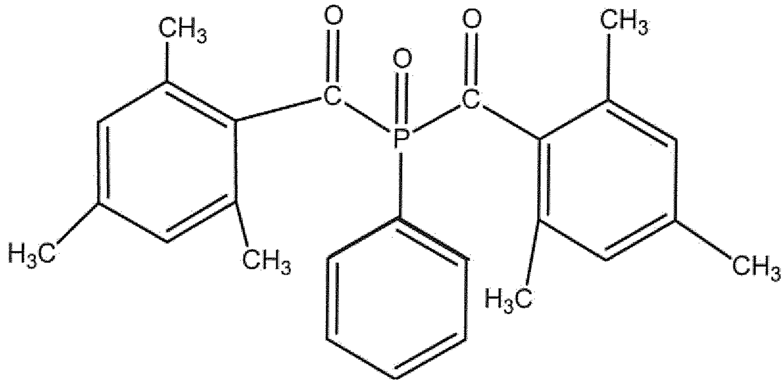

Irgacure® 1850

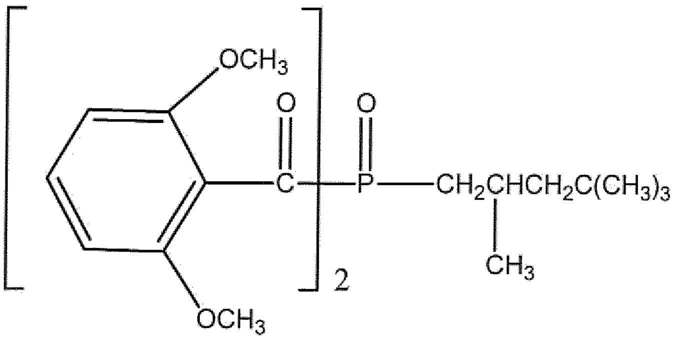

50 wt %

+

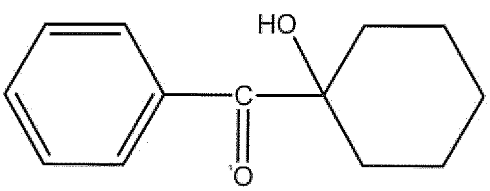

50 wt %

Darocure® 1173

In the present invention, the UV-initiator is added in usual amounts, namely from 0,1 to 5 parts by weight, preferably 1 to 5 parts by weight based on the total weight of HMA base polymer and UV polymerizable monomers and oligomers.

Another class of preferred HMA is the class of thermal curable HMA which are defined as adhesive compositions comprising at least one hot melt adhesive base polymer and at least one thermal or curable monomer or oligomer.

The same kind of monomer or oligomer as in the UV curable HMA may be used as far as they are thermally polymerizable under the transfer process conditions of the invention.

The preferred ratios of thermally polymerizable monomers and/or oligomers/HMA base polymers are the same as for the UV curable HMAs.

The thermal curable HMA composition comprises at least one thermal initiator.

Recommended thermal initiators are diacyl peroxides such as lauroyl peroxide (trade name Luperox LP), benzoyl peroxide (trade name: Luperox A98), peroxydicarbonates such as di(n-propyl) peroxydicarbonate (trade name Luperox 221), di(sec-butyl) peroxydicarbonate (trade name : Luperox 225V60), di(2-ethylhexyl) peroxydicarbonate (trade name Luperox 223S) Peroxyesters such as t-butyl peroxyneodecanoate Luperox 10 2,5-di(2-ethylhexanoylperoxy)-2,5-dimethylhexane, such as Luperox 256.

The thermal initiator is added in usual amounts, namely from 0,1 to 5 parts by weight, preferably 1 to 5 parts by weight based on the total weight of HMA base polymer and the thermally polymerizable monomers and oligomers.

As indicated above the applied film may be a coated or uncoated film.

When the applied film is a coated film, it comprises a carrier, preferably a flexible carrier, having one surface coated with a coating or a stack of coatings, generally classical functional coatings.

The flexible carrier may be a removable carrier, i.e. a carrier that is intended to be removed at the end of the application process, so that only the coating or stack of coatings is transferred to the lens substrate main surface after completion of the process.

Preferred removable carrier may be a thin supporting element made of a plastic material especially a thermoplastic material and in particular of polycarbonate. Generally, such a removable carrier has a thickness ranging from 0.2 to 5mm, preferably from 0.5 to 2mm.

When a removable carrier is used, curable adhesive is deposited either on the coating or stack of coatings borne by the carrier, or on the lens substrate main surface.

The carrier, preferably a flexible carrier, of the coated film may also be a permanent carrier, i.e. which remains on the final lenses or a semi-permanent carrier, i.e. which remains on the coated lens substrate at the completion of the present process but can be eliminated later, if needed. The thickness of the film could be from 0.3 to 1.5mm.

When permanent or semi-permanent carriers are used, the heat curable adhesive may also be deposited or the dry latex layer may also be formed on the uncoated surface of the flexible carrier.

Usual functional coatings, as is well known, comprise hydrophobic top coats, anti-reflecting coatings, anti-abrasion and/or scratch-resistant coatings, impact-resistant coatings, polarized coatings, photochromic coatings, dyed coatings, printed layers.

Preferably, the coated film comprises a stack of coating layers including a hydrophobic top coat layer, an anti-reflective coating (AR coating) layer, a scratch and/or abrasion resistant coating (hardcoat) layer, and optionally an impact-resistant coating layer (which can be the latex layer itself), these layers being deposited in this indicated order (reverse from the final order on the optical article) when the carrier is a removable carrier or is intended to be the outermost layer of the coated lens substrate or final optical article.

Of course, if the carrier is intended to be an intermediate layer between the lens substrate and the stack of coatings, the coating layers are deposited on one surface of the carrier in the order they shall achieve in the final product (in fact the reverse of the above indicated order).

The hydrophobic top coat, which in the finished optical article constitutes the outermost coating on the lens substrate, is intended for improving dirty mark resistance of the finished optical article and in particular of the anti-reflecting coating.

As known in the art, a hydrophobic top coat is a layer wherein the stationary contact angle to deionized water is at least 60°, preferably at least 75° and more preferably at least 90°, and even better more than 100°.

The stationary contact angle is determined according to the liquid drop method in which a water drop having a diameter smaller than 2 mm is formed on the optical article and the contact angle is measured.

The hydrophobic top coats preferably used in this invention are those which have a surface energy of less than 14 m Joules/$m^2$.

The invention has a particular interest when using hydrophobic top coats having a surface energy of less than 13 m Joules/$m^2$ and even better less than 12 m Joules/$m^2$.

The surface energy values referred just above are calculated according to Owens Wendt method described in the following document: Owens, D. K.; Wendt, R. G. "Estimation of the surface force energy of polymers", J. Appl. Polym. Sci. 1969, 51, 1741-1747.

Such anti-fouling top coats are well known in the art and are usually made of fluorosilicones or fluorosilazanes i.e. silicones or silazanes bearing fluorine-containing groups, which are both hydrophobic and oleophobic. Example of a preferred anti-fouling top coat material is the product commercialized by Shin Etsu under the name KP 801M.

The top coat may be deposited onto the carrier using any typical deposition process, but preferably using thermal evaporation technique.

Thickness of the anti-fouling top coat usually ranges from 1 to 30 nm, preferably 1 to 15 nm, more preferably 1 to 5 nm.

Anti-reflecting coatings and their methods of making are well known in the art. The anti-reflection can be any layer or stack of layers which improves the anti-reflective properties of the finished optical article. The anti-reflection coating may preferably consist of a mono- or multilayer film of dielectric materials such as SiO, SiO2 Si3N4, TiO2, ZrO2, Al2O3, MgF2 or Ta2O5, or mixtures thereof.

The anti-reflection coating can be applied by vacuum deposition or wet spin deposition, and in particular by vacuum deposition according to one of the following techniques:

1) - by evaporation, optionally ion beam-assisted;
2) - by spraying using an ion beam,
3) - by cathode sputtering; or
4) - by plasma-assisted vapor-phase chemical deposition.

In case where the film includes a single layer, its optical thickness must be equal to $\lambda$1/4 where $\lambda$ wavelength of 450 to 650 nm is.

Preferably, the anti-reflecting coating is a multilayer film comprising three or more dielectric material layers of alternatively high and low refractive indexes.

Of course, the dielectric layers of the multilayer anti-reflecting coating are deposited on the optical surface of the mold part or the hydrophobic top coat in the reverse order they should be present on the finished optical article.

A preferred anti-reflecting coating may comprises a stack of four layers formed by vacuum deposition, for example a first SiO2 layer 21 having an optical thickness of about 100 to 160 nm, a second $ZrO_2$ layer 22 having an optical thickness of about 120 to 190 nm, a third SiO2 layer 23 having an optical thickness of about 20 to 40 nm and a fourth $ZrO_2$ layer 24 having an optical thickness of about 35 to 75 nm.

Preferably, after deposition of the four-layer anti-reflecting stack, a thin layer of SiO2 of 1 to 50 nm thick (physical thickness) may be deposited. This layer promotes the adhesion between the anti-reflecting stack and the abrasion and/or scratch-resistant coating generally subsequently deposited, and is not optically active.

The next layer to be deposited is the abrasion and/or scratch-resistant coating. Any known optical abrasion and/or scratch-resistant coating composition can be used to form the abrasion and/or scratch-resistant coating. Thus, the abrasion and/or scratch-resistant coating composition can be a UV and/or a thermal curable composition.

By definition, an abrasion and/or scratch-resistant coating is a coating which improves the abrasion and/or scratch-resistant of the finished optical article as compared to a same optical article but without the abrasion and/or scratch-resistant coating.

Preferred abrasion and/or scratch-resistant coatings are those made by curing a precursor composition including epoxyalkoxysilanes or a hydrolyzate thereof, optionally colloidal mineral fillers and a curing catalyst. Examples of such compositions are disclosed in US 4,211,823, WO 94/10230, US 5,015,523, EP 614957.

The most preferred abrasion and/or scratch-resistant coating compositions are those comprising as the main constituents an epoxyalkoxysilane such as, for example, $\gamma$-glycidoxypropyltrimethoxysilane (GLYMO) and a dialkyldialkoxysilane such as, for example dimethyldiethoxysilane (DMDES), colloidal silica and a catalytic amount of a curing catalyst such as aluminum acetylacetonate or a hydrolyzate thereof, the remaining of the composition being essentially comprised of solvents typically used for formulating these compositions.

In order to improve the adhesion of the abrasion and/or scratch-resistant coating to the impact-resistant primer coating to be subsequently deposited or to the latex layer, an effective amount of at least one coupling agent can be added to the abrasion and/or scratch-resistant coating composition.

The preferred coupling agent is a pre-condensed solution of an epoxyalkoxysilane and an unsatured alkoxysilane, preferably comprising a terminal ethylenic double bond.

Examples of epoxyalkoxysilanes are:

$\gamma$-(glycidoxypropyl) trimethoxysilane,
$\gamma$-(glycidoxypropyl)pentamethyldisiloxane,
$\gamma$-(glycidoxypropyl)methyldiisopropenoxysilane,
$\gamma$-(glycidoxypropyl)methyldiethoxysilane,
$\gamma$-(glycidoxypropyl)dimethylethoxysilane,
$\gamma$-(glycidoxypropyl)diisopropylethoxysilane, and
$\gamma$-(glycidoxypropyl)bis(trimethylsiloxy) methylsilane.

The preferred epoxyalkoxysilane is γ-(glycidoxypropyl) trimethoxysilane.

The unsatured alkoxysilane can be a vinylsilane, an allylsilane, an acrylic silane or a methacrylic silane.

Examples of vinylsilanes are vinyltris(2-methoxyethoxy)silane, vinyltrisisobutoxysilane, vinyltri-t-butoxysilane, vinyltriphenoxysilane, vinyltrimethoxysilane, vinyltriisopropoxysilane, vinyltriethoxysilane, vinyltriacetoxysilane, vinylmethyldiethoxysilane, vinylmethyldiacetoxy-silane, vinylbis(trimethylsiloxy)silane and vinyldimethoxyethoxysilane.

Examples of allylsilanes are allyltrimethoxysilane, alkyltriethoxysilane and allyltris (trimethylsiloxy)silane.

Examples of acrylic silanes are:

3-acryloxypropyltris (trimethylsiloxy)silane,
3-acryloxypropyltrimethoxysilane,
3-acryloxypropylmethyldimethoxysilane,
3-acryloxypropylmethylbis(trimethylsiloxy)silane,
3-acryloxypropyldimethylmethoxysilane,
n-(3-acryloxy-2-hydroxypropyl)-3-aminopropyltriethoxysilane.

Examples of methacrylic silanes are:

3-methacryloxypropyltris (vinyldimethoxylsiloxy)silane,
3-methacryloxypropyltris (trimethylsiloxy) silane,
3-methacryloxypropyltris(methoxyethoxy)silane,
3-methacrylo-xypropyltrimethoxysilane,
3-methacryloxypropylpentamethyl disiloxane,
3-methacryloxypropylmethyldimethoxysilane,
3-methacryloxypropylmethyl-diethoxysilane,
3-methacryloxypropyldimethyl methoxysilane,
3-methacryloxypropyldimethylethoxysilane,
3-methacryloxypropenyltrime-thoxysilane, and
3-methacryloxypropylbis (trimethylsiloxy)methylsilane.

The preferred silane is acryloxypropyltrimethoxysilane.

Preferably, the amounts of epoxyalkoxysilane(s) and unsaturated alkoxysilane(s) used for the coupling agent preparation are such that the weight ratio

$$R = \frac{\text{weight of epoxyalkoxysilane}}{\text{weight of unsaturated alkoxysilane}}$$

verifies the condition $0.8 \leq R \leq 1.2$.

The coupling agent preferably comprises at least 50% by weight of solid material from the epoxyalkoxysilane(s) and unsaturated alkoxysilane(s) and more preferably at least 60% by weight.

The coupling agent preferably comprises less than 40% by weight of liquid water and/or organic solvent, more preferably less than 35% by weight.

The expression "weight of solid material from epoxyalkoxy silanes and unsatured alkoxysilanes" means the theoretical dry extract from those silanes which is the calculated weight of unit $Q_k$ Si $O_{(4-k)/2}$ where Q is the organic group that bears the epoxy or unsaturated group and $Q_k$ Si $O_{(4-k)/2}$ comes from $Q_k$ Si $R'O_{(4-k)}$ where Si R' reacts to form Si OH on hydrolysis.

k is an integer from 1 to 3 and is preferably equal to 1.

R' is preferably an alkoxy group such as $OCH_3$.

The water and organic solvents referred to above come from those which have been initially added in the coupling agent composition and the water and alcohol resulting from the hydrolysis and condensation of the alkoxysilanes present in the coupling agent composition.

Preferred preparation methods for the coupling agent comprises :

1) mixing the alkoxysilanes
2) hydrolysing the alkoxysilanes, preferably by addition of an acid, such a hydrochloric acid
3) stirring the mixture
4) optionally adding an organic solvent

5) adding one or several catalyst(s) such as aluminum acetylocetonate
6) Stirring (typical duration: overnight).

Typically the amount of coupling agent introduced in the scratch-resistant coating composition represents 0.1 to 15% by weight of the total composition weight, preferably 1 to 10% by weight.
The abrasion and/or scratch-resistant coating composition can be applied on the anti-reflecting coating using any classical method such as spin, dip or flow coating.
The abrasion and/or scratch-resistant coating composition can be simply dried or optionally precured before application of the subsequent impact-resistant primer coating (which may be the dry latex layer) or implementation of the process of the invention. Depending upon the nature of the abrasion and/or scratch-resistant coating composition thermal curing, UV-curing or a combination of both can be used.
Thickness of the abrasion and/or scratch-resistant coating, after curing, usually ranges from 1 to 15 μm, preferably from 2 to 6 μm.
Before applying the impact resistant primer on the scratch-resistant coating, it is possible to subject the surface of the scratch-resistant coating to a corona treatment or a vacuum plasma treatment, in order to increase adhesion.
The impact-resistant primer coating can be any coating typically used for improving impact resistance of a finished optical article. Also, this coating generally enhances adhesion of the scratch-resistant coating on the substrate of the finished optical article.
By definition, an impact-resistant primer coating is a coating which improves the impact resistance of the finished optical article as compared with the same optical article but without the impact-resistant primer coating.
Typical impact-resistance primer coatings are (meth)acrylic based coatings and polyurethane based coatings.
(Meth)acrylic based impact-resistant coatings are, among others, disclosed in US-5,015,523, US-6,503,631 whereas thermoplastic and cross linked based polyurethane resin coatings are disclosed inter alia, in Japanese Patents 63-141001 and 63-87223, EP-0404111 and US-5,316,791.
In particular, the impact-resistant primer coating according to the invention can be made from a latex composition such as a poly(meth)acrylic latex, a polyurethane latex or a polyester latex.
Among the preferred (meth)acrylic based impact-resistant primer coating compositions there can be cited polyethyleneglycol(meth)acrylate based compositions such as, for example, tetraethyleneglycoldiacrylate, polyethyleneglycol (200) diacrylate, polyethyleneglycol (400) diacrylate, polyethyleneglycol (600) di(meth)acrylate, as well as urethane (meth)acrylates and mixtures thereof.
Preferably the impact-resistant primer coating has a glass transition temperature (Tg) of less than 30°C.
Among the preferred impact-resistant primer coating compositions, there may be cited the acrylic latex commercialized under the name Acrylic latex A-639 commercialized by Zeneca and polyurethane latex commercialized under the names W213, W-240 and W-234 by Baxenden.
In a preferred embodiment, the impact-resistant primer coating may also include an effective amount of a coupling agent in order to promote adhesion of the primer coating to the optical substrate and/or to the scratch-resistant coating.
The same coupling agents, in the same amounts, as for the scratch-resistant coating compositions can be used with the impact-resistant coating compositions.
The impact-resistant primer coating composition can be applied on the scratch-resistant coating using any classical method such as spin, dip, or flow coating.
The impact-resistant primer coating composition can be simply dried or optionally block before molding of the optical substrate.
Depending upon the nature of the impact-resistant primer coating composition, thermal curing, UV-curing or a combination of both can be used.
Thickness of the impact-resistant primer coating, after curing, typically ranges from 0.05 to 30 μm, preferably 0.5 to 20 μm and more particularly from 0.6 to 15 μm, and even better 0.6 to 2 μm.
When the flexible carrier of the coated film is intended to be withdrawn at the completion of the process the face of film bearing the coating or coating stack may be first coated with a protecting and releasing coating which acts to protect the film face and has to be removed before implementing the process of the invention.
The applied films may also be uncoated films such as polarized films, coloured films, photochromic films, electric-photochromic films and printed films, preferably polarized films, coloured films and photochromic films, or combinations of these films, microstructured or logo film. The thickness of the films could be from 0.3 to 1.5 mm.
Referring to Figure 1 there is schematically represented a system for heating the first main surface of a lens substrate using an inflatable membrane apparatus 1. The accumulator of the inflatable membrane apparatus is connected to a circular fluid flow system for introducing pressurized hot fluid, preferably a mixture of water and propylene glycol from 50:50 to 0:100, into the accumulator.
The circular fluid flow system comprises a fluid tank 2 which is connected to a heating device 3, preferably a

microwave heating device. The inlet of the accumulator is connected to the outlet of the heating device 3. The inlet of heating device 3 is connected to outlet of tank 2. The outlet of the accumulator of apparatus 1 is connected through a pump 4 to an inlet of tank 2. A temperature sensor is placed in the fluid flow system and connected with heating device 3. With such a device a fast heating and easy temperature control is obtained.

As shown in Figure 2, the accumulator 10 comprises a cavity 11 the top wall of which is a quartz plate 12 allowing UV light from a UV lamp 2 to pass and the bottom wall is a flexible membrane made of silicon rubber. A fluid inlet 14 and a fluid outlet 15 allow introduction of pressurized hot water into the cavity 11 and inflation of membrane 13.

The lens L to be coated is placed on a support 20 of the inflatable membrane apparatus with its rear concave surface facing the inflatable membrane 13. In this configuration, the rear concave surface corresponds to the first main surface, while the front convex surface corresponds to the second main surface of the invention.

According to the invention the front convex surface of lens L is in contact with a matching surface of a non deformable heat sink block 21 which is accommodated in support 20.

A coated or uncoated film (not shown) is placed between the lens L and inflatable membrane 13 with a layer of adhesive already formed either on the rear surface of lens L or on the film side facing lens L.

Pressurized hot fluid is introduced into the accumulator 10 using the above described system and the membrane is deformed and progressively applies pressure on the film. Heating is achieved by circulation of the hot fluid inside the accumulator cavity.

After the heating cycle, the lens and film are exposed to UV light from lamp 2 to cure the adhesive.

The following examples illustrate the present invention.

**1 - Adhesive composition**

The adhesive composition used in the examples is a UV curable HMA having the following composition

| | | Wt% |
|---|---|---|
| HMA Polymer | Aquazol 200® (Poly (2-ethyl-2-oxazoline) | 20 |
| UV curable monomer | Cyclohexane dimethanol diacrylate | 20 |
| Solvent | Methylethylketone (MEK) | 60 |
| UV catalyst | 80% Darocure 1173®, 20% Irgacure 819® | 5%* |
| *Based on total weight of HMA polymer + UV curable monomer + solvent. | | |

HMA polymer has a Tg of 70°C, and UV curable monomer has a melting point of 50 - 60°C.

**2 - Coated film**

The coated film comprises a polycarbonate (PC) carrier bearing on its convex surface (7D base) a coating stack including, starting from the carrier a hydrophobic top coat, an anti-reflective coating and an abrasion and/or scratch resistant coating.

An adhesive layer is formed on the abrasion and/or scratch resistant coating by spin coating the above disclosed adhesive composition.

The assembly of the coating stack and the adhesive layer is called the HMC coating.

STEP 1: Protecting and releasing coating

The composition of the protecting and releasing coating was as follows:

| Component | Parts by weight |
|---|---|
| PETA LQ (acrylic ester of pentaerythritol) | 5.00 |
| Dowanol PnP | 5.00 |
| Dowanol PM | 5.00 |
| n-propanol | 5.00 |
| 1360 (Silicone Hexa-acrylate, Radcure) | 0.10 |

(continued)

| Component | Parts by weight |
|---|---|
| Coat-O-Sil 3503 (reactive flow additive) | 0.06 |
| Photo initiator | 0.20 |

The PC carrier is cleaned using soapy water and dried with compressed air. The carrier convex surface is then coated with the above protecting coating composition via spin coating with application speed of 600 rpm for 3 seconds and dry speed of 1200 rpm for 6 seconds. The coating is cured using Fusion System H+ bulb at a rate of 1.524 m/minute (5 feet per minute).

STEP 2: Hydrophobic top coat and anti-reflective (AR) coating

The PC carrier after deposition of the protecting coating is vacuum coated as follows:
A/ Standard Vacuum AR Treatment: The Vacuum AR treatment is accomplished in a standard box coater using well known vacuum evaporation practices. The following is one procedure for obtaining the VAR on the mold:
1. The carrier having the protective coating already applied on the surface is loaded into a standard box coater and the chamber is pumped to a high vacuum level.
2. Hydrophobic coating (Chemical = Shin Etsu KP801M) is deposited onto the surface of the carrier using a thermal evaporation technique, to a thickness in the range of 2-15 nm.
3. The dielectric multilayer AR coating, consisting of a stack of sublayers of high and low refractive index materials is then deposited, in reverse of the normal order. Details of this deposition are as such :
The optical thicknesses of the alternating low and high refractive index layers are presented in the table (They are deposited in the indicated order, from the mold surface):

| | |
|---|---|
| Low index | 103-162 nm |
| High index | 124-190 nm |
| Low index | 19-37 nm |
| High index | 37-74 nm |

A preferred stack is a stack wherein the low index material is $SiO_2$ and the high index material is $ZrO_2$.
B/ At the completion of the deposition of the four-layer anti-reflection stack, a thin layer of $SiO_2$, comprising of a physical thickness of 1-50 nm, is deposited. This layer is to promote adhesion between the oxide anti-reflection stack and a lacquer hard-coating which will be deposited on the coated mold at a later time.

STEP 3: Deposition of hard Coat (HC)

The composition of the hard coating is as follows:

| Component | Parts by weight |
|---|---|
| Glymo | 21.42 |
| 0.1N HCl | 4.89 |
| Colloidal silica | 30.50 |
| Methanol | 29.90 |
| Diacetone alcohol | 3.24 |
| Aluminium acetylacetonate | 0.45 |
| Coupling agent | 9.00 |
| Surfactant FC-430 (3M company) | 0.60 |

The composition of the primer is as follows:

| Component | Parts by weight |
|---|---|
| Polyurethane latex W-234 | 35.0 |
| Deionized water | 50.0 |
| 2-Butoxy ethanol | 15.0 |
| Coupling agent | 5.00 |

The PC carrier after deposition of protecting coating and AR coating in Steps 1 and 2 is then spin coated by HC solution at 600 rpm/1200 rpm, and block 10 minutes at 80°C, and again spin coated with adhesive composition.

The coupling agent is a pre-condensed solution of:

| Component | Parts by weight |
|---|---|
| GLYMO (Glycidoxypropyltrimethoxysilane) | 10 |
| Acryloxypropyltrimethoxysilane | 10 |
| 0.1 N HCl | 0.5 |
| Aluminum acetylacetonate | 0.5 |
| Diacetone alcohol | 1.0 |

## 3 - Testing and inspection procedures:

- Dry adhesion is measured using the cross-hatch adhesion test according to ISTM 02010, using 3M SCOTCH® n°600 transparent tape.
  25 squares are formed.

Adhesion is rated as follows:

| Adhesion score | Squares removed | Area % left intact |
|---|---|---|
| 0 | 0 | 100 |
| 1 | < 1 | 96 |
| 2 | 1 to 4 | 96-84 |
| 3 | > 4 to 9 | 83-64 |
| 4 | > 9 to 16 | 63-36 |
| 5 | > 16 | < 36 |

## 4 - Carrier preparation:

0.5mm PC carrier made by injection is coated on their convex surface with HMC coating as disclosed above.

## 5 - Temperature measurement

Experiments on temperature measurement have been made on lenses comprising an AR coating on the front convex surface but without application of the adhesive.

### Experiment 1

An Orma SF® lens (-2.00 power sphere lens with rear base curve 6.5 and center thickness of 2 mm, Diameter of 70mm) with its front surface already coated with an AR coating. The rear surface corresponds to the first main surface

of the lens while the front surface corresponds to the second main surface of the lens.

The AR coating is a four-layer antireflection stack wherein the low index material is $SiO_2$ and the high index material is $ZrO_2$ deposited in the indicated order on a hard coat.

| Layer | Optical thicknesses |
|---|---|
| High index | 37-74 nm |
| Low index | 19-37 nm |
| High index | 124-190 nm |
| Low index | 103-162 nm |

The hard coat comprises Glymo, colloidal silica, aluminium acetylacetonate catalyst.

Orma® lens made of CR-39® from PPG Industries (copolymers ethyleneglycol bis (alloy carbonate).

The lens is placed in the inflatable membrane apparatus heated with the above described circular fluid flow system using a non deformable heat sink block made of polycarbonate of 5mm thick. The block surface in contact with the lens front convex surface matches the lens surface curvature and covers the entire surface of the lens. A piece of silicone membrane (1-2mm thick) is added between the lens support and the test lens in order to protect the AR coating.

The accumulator is set with a flow liquid pressure of 24 psig (1.65 bars) and the pressurized liquid was heated at 80°C. After heating for 2 minutes the system was UV irradiated for 1 minute using a UV lamp RC600 provided by Xenon Corp.

Temperatures of the front and rear surface of the lens are registered during the heating and irradiation steps (Figure 3).

As shown in Figure 3 the rear surface of the lens is very quickly heated to the required temperature while the front surface temperature is still kept quite low before UV irradiation.

Temperature of the front surface still increases more than the temperature of the rear surface. The temperature gap between rear and front surface is around 17°C while it is of 12°C just after applying UV.

**Experiment 2**

Experiment 1 is reproduced without the use of any non deformable heat sink block.

Temperature graphs are shown in Figure 4.

In this experiment, heavy crazing appears on the front side.

**Experiment 3**

Experiment 1 is reproduced except the activating step heating + UV is realized in a traditional temperature controlled UV Oven made by Mitsubishi Rayon Engineering Co., Ltd. where a cycle heating air flow is used to heat the entire lens and assembly unit and the UV lamp is a metal halide with 80W/cm from the top side. The lens is heated for 30 minutes and then UV irradiated for 1 minute to cure the UV HMA layer.

As shown in Figure 5, the temperature difference between both sides of the lens is less than 5°C before applying UV.

In this experiment, heavy crazing appears on the front side.

**Claims**

**1.** A process for applying under pressure a coated or uncoated film onto a main surface of a lens substrate (L) comprising:

(a) providing a coated or uncoated film;
(b) providing a lens substrate having a first main surface and an opposite second main surface, said second main surface bearing at least one coating which is sensitive to a temperature T;
(c) forming a layer of an adhesive between a face of the coated or uncoated film and the first main surface of the lens substrate ;
(d) applying pressure on the coated or uncoated film to urge said film against the lens substrate first main surface, with the adhesive between, to conform the film to the lens substrate first main surface ;
(e) maintaining pressure on the film while, subjecting the adhesive to an activation step for activating the adhesive

and promoting adhesion between the film and said first main surface of the lens substrate;
(f) stopping activation and releasing applied pressure; and
(g) recovering the lens substrate with the coated or uncoated film adhered thereon;

wherein during the pressure application steps and activation steps the second main surface of the lens substrate (L) is at least partly in contact with a matching surface of a non deformable heat sink block (21) made of a plastic material, and during the activation step the first main surface of the lens substrate (L) is heated to at least the temperature T, while the second main surface of the lens substrate maintained at a temperature of at least 10°C lower than temperature T without the use of any cooling system.

**2.** The process of claim 1, wherein activation step comprises heating, UV irradiation or a combination of both.

**3.** The process of claim 1 or 2, wherein the heat sink block has a thermal conductivity of at least 0.15 W $m^{-1}K^{-1}$.

**4.** The process according to anyone of claims 1 to 3, wherein the matching surface of the heat sink block is in contact with at least 50% of the second main surface of the lens substrate and the central area of the second main surface.

**5.** The process according to anyone of claims 1 to 4, wherein the heat sink block (21) is a lens substrate mounting block for a surfacing process.

**6.** The process according to anyone of claims 1 to 5, wherein the non deformable heat sink block comprises a plurality of plastic materials each having thermal conductivities of at least 0.15 W $m^{-1}K^{-1}$.

**7.** The process according to anyone of claims 1 to 6, wherein in activation step (e) the second main surface of the lens substrate is heated for less than 10 minutes, preferably less than 5 minutes.

**8.** The process according to anyone of claims 1 to 7, wherein in the activation step the temperature on the second main surface of the lens substrate does not exceed 70°C.

**9.** The process according to anyone of claims 1 to 8, wherein in the activation step the temperature of the second main surface of the lens substrate does not exceed 50°C and is at least 20°C lower than temperature T.

**10.** The process according to anyone of claims 1 to 9, wherein temperature T ranges from 50°C to 110°C, preferably from 70°C to 90°C.

**11.** The process according to anyone of claims 1 to 10, wherein the adhesive is a hot melt adhesive (HMA), a UV curable hot melt adhesive (UV-HMA) or a UV or thermal curable adhesive.

**12.** The process according to anyone of claims 1 to 11, wherein said at least one temperature sensitive coating is an anti-reflective coating.

**Patentansprüche**

**1.** Verfahren zum Aufbringen eines beschichteten oder unbeschichteten Films auf eine Hauptoberfläche eines Linsensubstrats (L) unter Druck, umfassend:

(a) Bereitstellen eines beschichteten oder unbeschichteten Films;
(b) Bereitstellen eines Linsensubstrats, das eine erste Hauptoberfläche und eine gegenüberliegende zweite Hauptoberfläche aufweist, wobei die zweite Hauptoberfläche wenigstens eine Beschichtung trägt, die empfindlich gegenüber einer Temperatur T ist;
(c) Bilden einer Schicht aus einem Klebstoff zwischen einer Seite des beschichteten oder unbeschichteten Films und der ersten Hauptoberfläche des Linsensubstrats;
(d) Anlegen von Druck an den beschichteten oder unbeschichteten Film, um den Film mit dem dazwischenliegenden Klebstoff gegen die erste Hauptoberfläche des Linsensubstrats zu drücken, um den Film an die erste Hauptoberfläche des Linsensubstrats anzupassen;
(e) Halten des Drucks an dem Film und dabei Unterwerfen des Klebstoffs an einen Aktivierungsschritt zum Aktivieren des Klebstoffs und Fördern der Haftung zwischen dem Film und der ersten Hauptoberfläche des

Linsensubstrats;
(f) Beenden des Aktivierens und Lösen des angelegten Drucks; und
(g) Entnehmen des Linsensubstrats mit dem daran angehafteten beschichteten oder unbeschichteten Film;

wobei sich die zweite Hauptoberfläche des Linsensubstrats (L) während der Schritte des Anlegens von Druck und der Aktivierungsschritte wenigstens teilweise in Kontakt mit einer damit zusammenpassenden Oberfläche eines nicht verformbaren Wärmesenkeblocks (21) aus einem Kunststoffmaterial befindet und während des Aktivierungsschritts die erste Hauptoberfläche des Linsensubstrats (L) auf wenigstens die Temperatur T erhitzt wird, während die zweite Hauptoberfläche des Linsensubstrats ohne Verwendung eines Kühlsystems bei einer Temperatur von wenigstens 10 °C tiefer als die Temperatur T gehalten wird.

2. Verfahren gemäß Anspruch 1, wobei der Aktivierungsschritt Erhitzen, UV-Bestrahlung oder eine Kombination von beidem umfasst.

3. Verfahren gemäß Anspruch 1 oder 2, wobei der Wärmesenkeblock eine Wärmeleitfähigkeit von wenigstens 0,15 $Wm^{-1}K^{-1}$ aufweist.

4. Verfahren gemäß einem der Ansprüche 1 bis 3, wobei sich die damit zusammenpassende Oberfläche des Wärmesenkeblocks mit wenigstens 50 % der zweiten Hauptoberfläche des Linsensubstrats und dem zentralen Bereich der zweiten Hauptoberfläche in Kontakt befindet.

5. Verfahren gemäß einem der Ansprüche 1 bis 4, wobei der Wäemesenkeblock (21) ein Linsensubstrat-Befestigungsblock für ein Oberflächenbehandlungsverfahren ist.

6. Verfahren gemäß einem der Ansprüche 1 bis 5, wobei der nicht verformbare Wärmesenkeblock eine Vielzahl von Kunststoffmaterialien umfasst, die jeweils Wärmeleitfähigkeiten von wenigstens 0,15 $Wm^{-1}K^{-1}$ aufweisen.

7. Verfahren gemäß einem der Ansprüche 1 bis 6, wobei bei dem Aktivierungsschritt (e) die zweite Hauptoberfläche des Linsensubstrats für weniger als 10 Minuten erhitzt wird, vorzugsweise weniger als 5 Minuten.

8. Verfahren gemäß einem der Ansprüche 1 bis 7, wobei bei dem Aktivierungsschritt die Temperatur an der zweiten Hauptoberfläche des Linsensubstrats 70 °C nicht übersteigt.

9. Verfahren gemäß einem der Ansprüche 1 bis 8, wobei bei dem Aktivierungsschritt die Temperatur der zweiten Hauptoberfläche des Linsensubstrats 50 °C nicht übersteigt und wenigstens 20 °C tiefer als die Temperatur T ist.

10. Verfahren gemäß einem der Ansprüche 1 bis 9, wobei die Temperatur T in dem Bereich von 50 °C bis 110 °C liegt, vorzugsweise von 70 °C bis 90 °C.

11. Verfahren gemäß einem der Ansprüche 1 bis 10, wobei der Klebstoff ein Heißschmelzklebstoff (HMA), ein UV-härtbarer Heißschmelzklebstoff (UV-HMA) oder ein UV- oder wärmehärtbarer Klebstoff ist.

12. Verfahren gemäß einem der Ansprüche 1 bis 11, wobei die wenigstens eine temperaturempfindliche Beschichtung eine Antireflexbeschichtung ist.

## Revendications

1. Procédé destiné à appliquer sous pression un film revêtu ou non revêtu sur une surface principale d'un substrat de verre (L) comprenant les étapes suivantes :

(a) se procurer un film revêtu ou non revêtu ;
(b) se procurer un substrat de verre ayant une première surface principale et une deuxième surface principale opposée, ladite deuxième surface principale portant au moins un revêtement qui est sensible à une température T ;
(c) former une couche d'un adhésif entre une face du film revêtu ou non revêtu et la première surface principale du substrat de verre ;
(d) appliquer une pression sur le film revêtu ou non revêtu pour pousser ledit film contre la première surface

principale du substrat de verre, avec l'adhésif entre eux, pour que le film épouse la première surface principale du substrat de verre ;
(e) maintenir une pression sur le film tout en soumettant l'adhésif à une étape d'activation pour activer l'adhésif et favoriser l'adhérence entre le film et ladite première surface principale du substrat de verre ;
(f) arrêter l'activation et relâcher la pression appliquée ; et
(g) récupérer le substrat de verre avec le film revêtu ou non revêtu collé par-dessus ;

dans lequel pendant les étapes d'application de pression et les étapes d'activation la deuxième surface principale du substrat de verre (L) est au moins partiellement en contact avec une surface complémentaire d'un bloc de dissipation thermique indéformable (21) constitué d'un matériau plastique, et pendant l'étape d'activation la première surface principale du substrat de verre (L) est chauffée au moins jusqu'à la température T, tandis que la deuxième surface principale du substrat de verre est maintenue à une température inférieure d'au moins 10 °C à la température T sans utiliser un quelconque système de refroidissement.

**2.** Procédé de la revendication 1, dans lequel l'étape d'activation comprend un chauffage, une irradiation par UV ou une combinaison des deux.

**3.** Procédé de la revendication 1 ou 2, dans lequel le bloc de dissipation thermique a une conductivité thermique d'au moins 0,15 $Wm^{-1}K^{-1}$

**4.** Procédé selon l'une quelconque des revendications 1 à 3, dans lequel la surface complémentaire du bloc de dissipation thermique est en contact avec au moins 50 % de la deuxième surface principale du substrat de verre et la zone centrale de la deuxième surface principale.

**5.** Procédé selon l'une quelconque des revendications 1 à 4, dans lequel le bloc de dissipation thermique (21) est un bloc de montage de substrat de verre pour un procédé de surfaçage.

**6.** Procédé selon l'une quelconque des revendications 1 à 5, dans lequel le bloc de dissipation thermique indéformable comprend une pluralité de matériaux plastiques ayant chacun des conductivités thermiques d'au moins 0, 15 $Wm^{-1}K^{-1}$.

**7.** Procédé selon l'une quelconque des revendications 1 à 6, dans lequel à l'étape d'activation (e) la deuxième surface principale du substrat de verre est chauffée pendant moins de 10 minutes, de préférence moins de 5 minutes.

**8.** Procédé selon l'une quelconque des revendications 1 à 7, dans lequel à l'étape d'activation la température de la deuxième surface principale du substrat de verre ne dépasse pas 70 °C.

**9.** Procédé selon l'une quelconque des revendications 1 à 8, dans lequel à l'étape d'activation la température de la deuxième surface principale du substrat de verre ne dépasse pas 50 °C et est inférieure d'au moins 20 °C à la température T.

**10.** Procédé selon l'une quelconque des revendications 1 à 9, dans lequel la température T va de 50 °C à 110 °C, de préférence de 70 °C à 90 °C.

**11.** Procédé selon l'une quelconque des revendications 1 à 10, dans lequel l'adhésif est un adhésif thermofusible (HMA), un adhésif thermofusible durcissable aux UV (UV-HMA) ou un adhésif durcissable aux UV ou à la chaleur.

**12.** Procédé selon l'une quelconque des revendications 1 à 11, dans lequel ledit au moins un revêtement sensible à la température est un revêtement antireflet.

FIG. 1

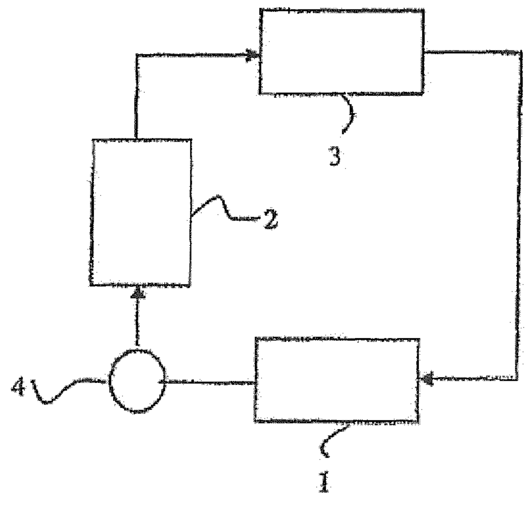

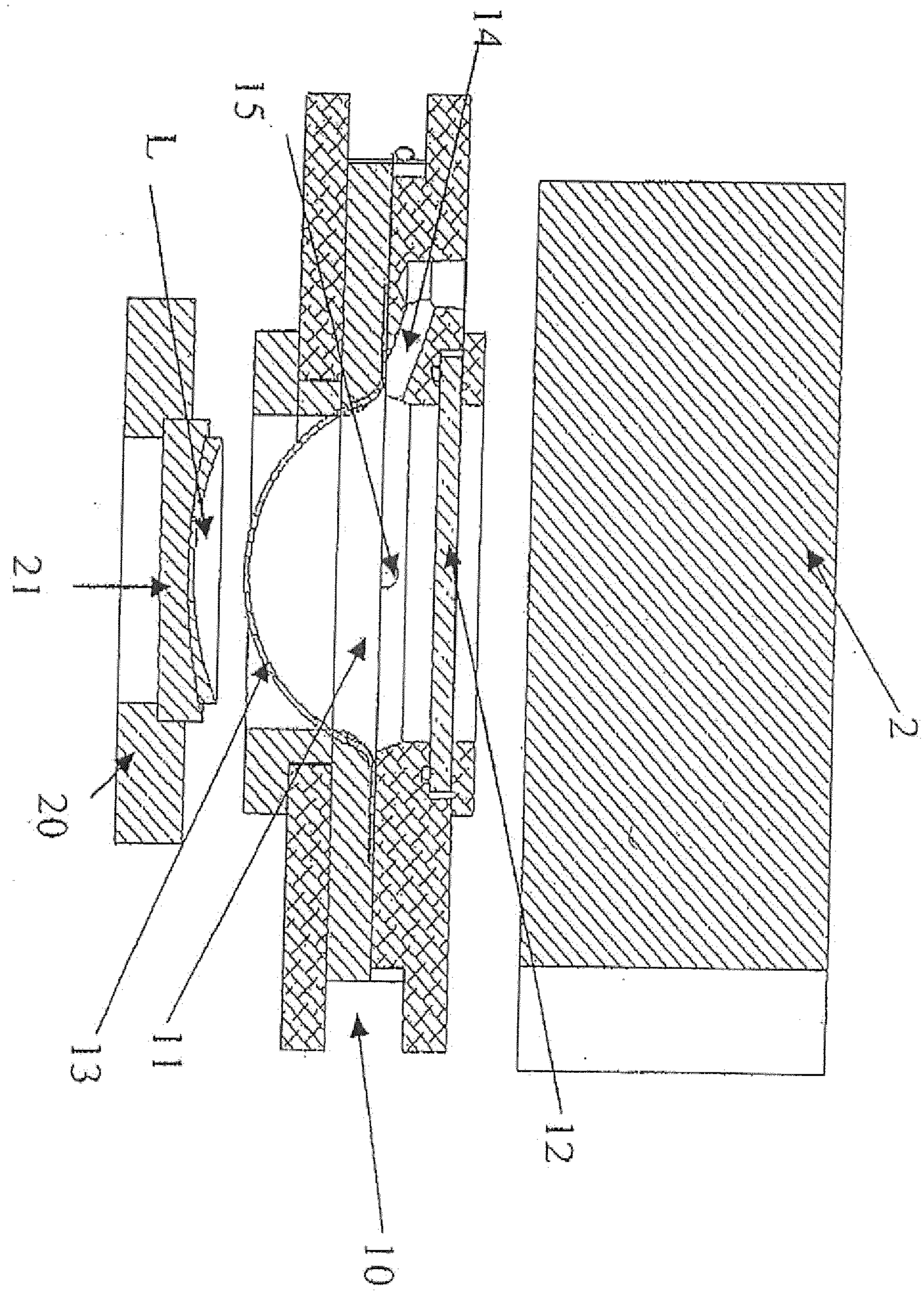


FIG. 2

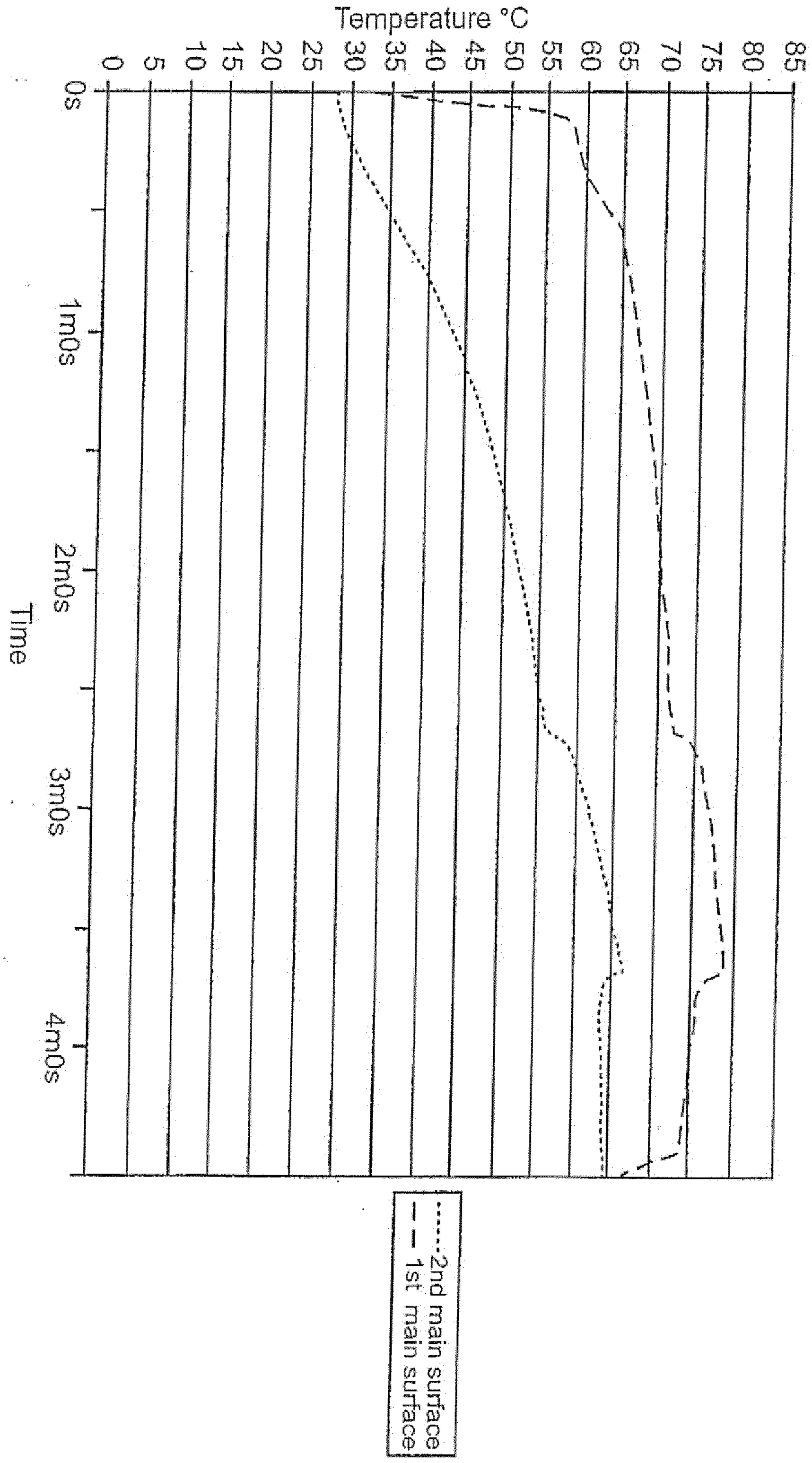
Temperature °C
0
5
10
15
20
25
30
35
40
45
50
55
60
65
70
75
80
85
0s
1m0s
2m0s
3m0s
4m0s
Time
2nd main surface
1st main surface

FIG. 3

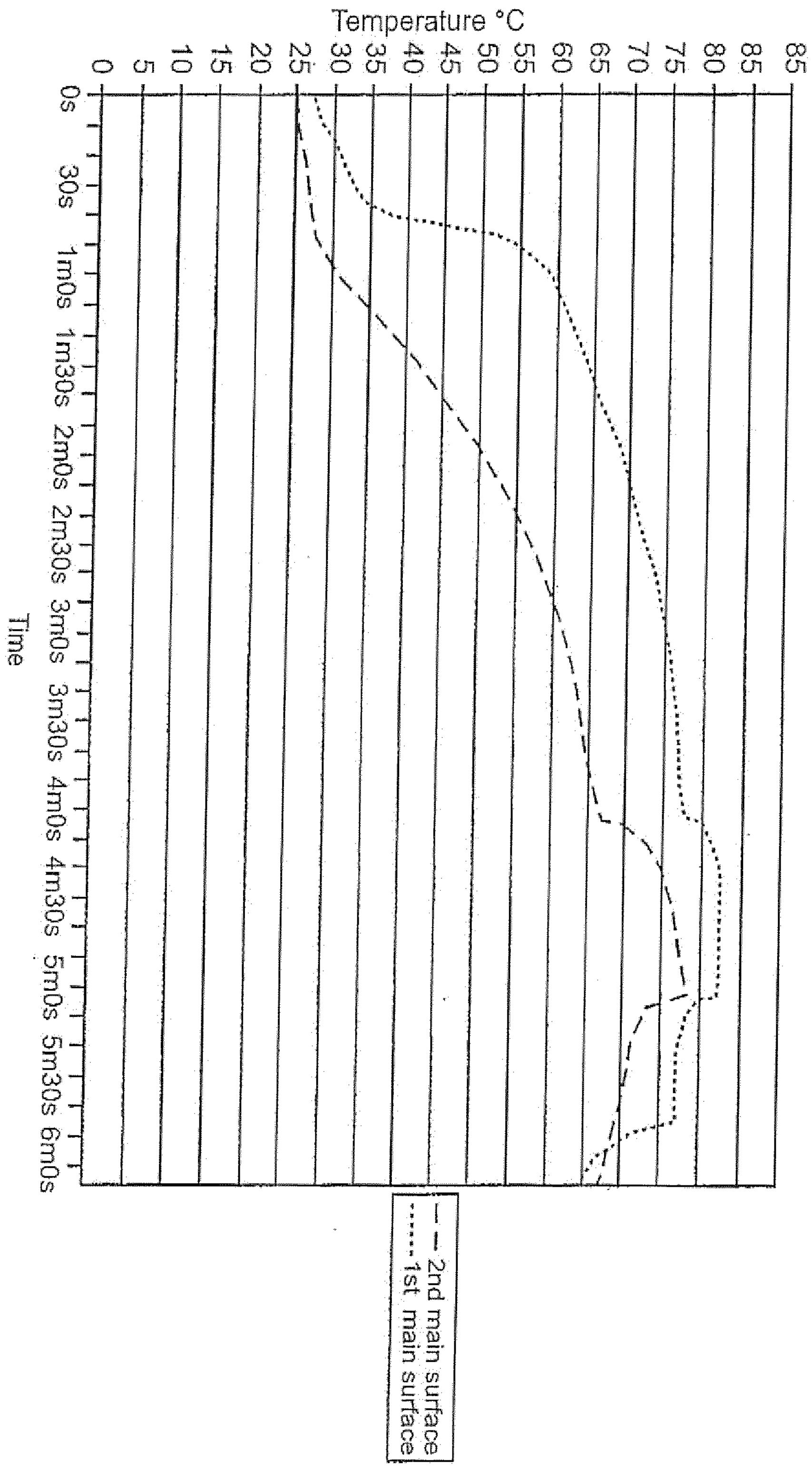
Temperature °C
0
5
10
15
20
25
30
35
40
45
50
55
60
65
70
75
80
85
0s
30s
1m0s
1m30s
2m0s
2m30s
3m0s
3m30s
4m0s
4m30s
5m0s
5m30s
6m0s
Time
2nd main surface
1st main surface

FIG 4

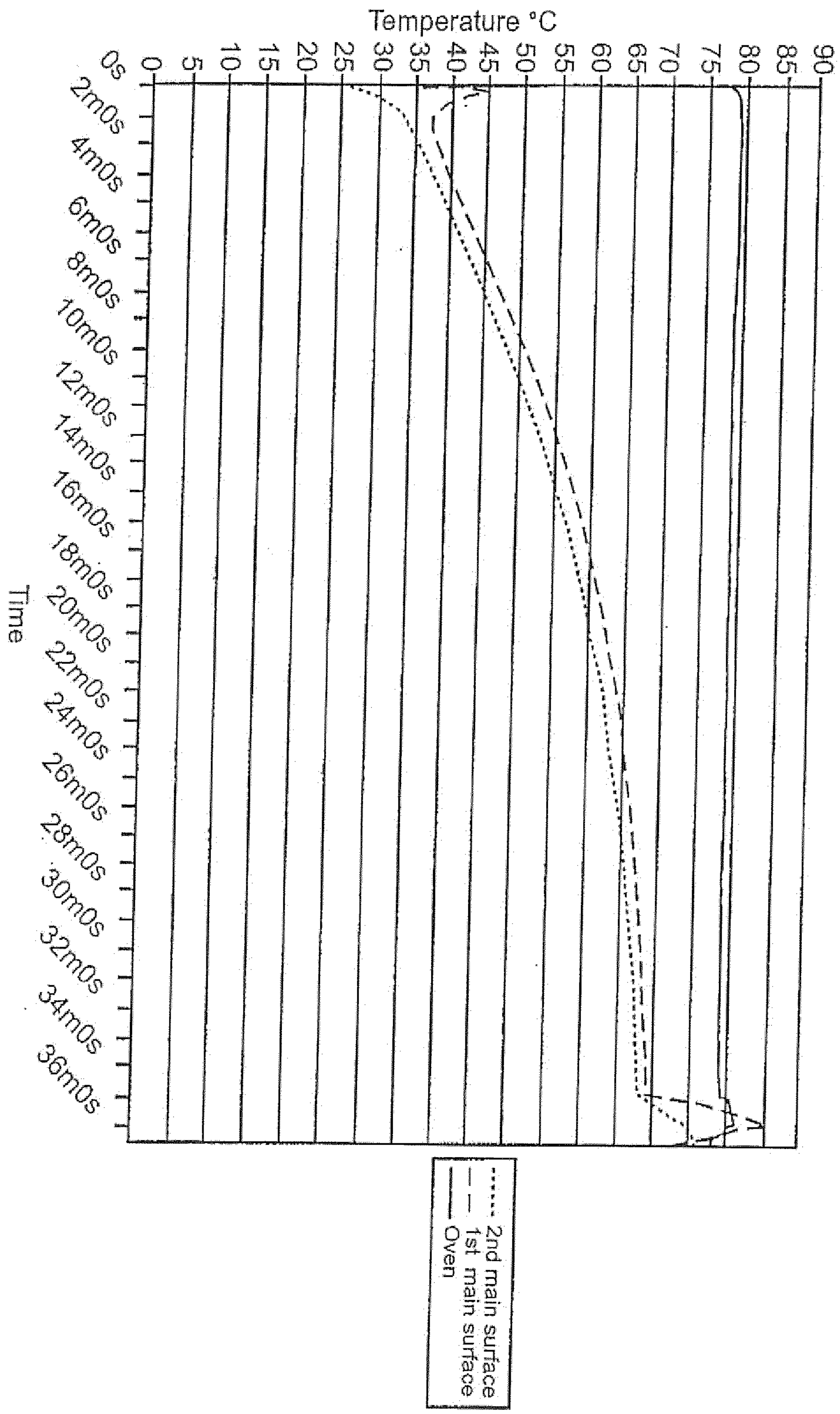
Temperature °C
0
5
10
15
20
25
30
35
40
45
50
55
60
65
70
75
80
85
90
Time
0s
2m0s
4m0s
6m0s
8m0s
10m0s
12m0s
14m0s
16m0s
18m0s
20m0s
22m0s
24m0s
26m0s
28m0s
30m0s
32m0s
34m0s
36m0s
2nd main surface
1st main surface
Oven

FIG 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4304751 A
- US 5139407 A
- US 4880591 A
- US 6562466 B
- WO 2006082105 A
- WO 03004255 A
- WO 07020236 A
- WO 04101260 A
- US 20070122547 A
- US 20060169407 A
- US 5128388 A
- US 6503631 B
- US 4211823 A
- WO 9410230 A
- US 5015523 A
- EP 614957 A
- JP 63141001 A
- JP 63087223 A
- EP 0404111 A
- US 5316791 A


### Non-patent literature cited in the description


- **OWENS, D. K. ; WENDT, R. G.** Estimation of the surface force energy of polymers. *J. Appl. Polym. Sci.,* 1969, vol. 51, 1741-1747